# EUROPEAN PATENT APPLICATION

(11) **EP 1 927 578 A1**
(43) Date of publication of application: **04.06.2008**
(21) Application number: 06024968.7
(22) Date of filing: 02.12.2006
(51) Int. Cl.: C01B 3/38, B01J 8/02

(54) **Process for producing synthesis gas and related apparatus**

(71) Applicant: Casale Chemicals S.A., 6900 Lugano-Besso (CH)
(72) Inventor: Filippi, Ermanno, 6976 Castagnola (CH); Bedetti, Gianfranco, 20149 Milano (IT); Zanichelli, Luca, 22010 Grandola ed Uniti (IT)
(74) Representative: Zardi, Marco

(57) **Abstract**

A process for producing synthesis gas (70) by means of catalytic autothermal reforming treatment of a feed gaseous flow (50) comprising hydrocarbons, with the obtainment of partially transformed gas (65) and synthesis gas (70), is characterized in that it comprises the operative steps of:
- mixing a first portion (23) of the feed gaseous flow (50) comprising hydrocarbons with a gaseous flow (60) comprising oxygen,
- subjecting the resulting mixture to partial combustion, with the obtainment of a gaseous flow (25) of at least partially combusted gases,
- mixing a second portion (55) of the gaseous flow comprising hydrocarbons with the gaseous flow (25) of at least partially combusted gases, so as to advantageously attain a dilution of the concentration of the hydrocarbons present therein and
- subjecting the resulting mixture to said catalytic autothermal reforming, so preventing the formation of soot.

## Description

### Field of application

The present invention refers, in its more general aspect, to a process for producing synthesis gas comprising hydrogen and carbon monoxide, essentially based on a treatment of catalytic autothermal reforming of a feed gaseous flow comprising hydrocarbons, preferably a natural gas, such as methane, with the obtainment of a synthesis gas.

The invention also refers to an apparatus for producing a synthesis gas which actuates the abovementioned process.

### Prior Art

As it is known, for the production of a synthesis gas comprising in particular hydrogen and carbon monoxide, starting from gaseous hydrocarbons, natural gas such as methane and similar starting materials, i.e. starting from a feed gaseous flow comprising hydrocarbons, a so-called catalytic autothermal reforming treatment is widely used in which the hydrocarbons present in said feed gaseous flow are partially oxidised, with the consequent obtainment of the desired synthesis gas.

As known, the catalytic autothermal reforming comprises a step of forced oxidation, or rather a step of partial combustion with oxygen of the feed gaseous flow comprising hydrocarbons, with the obtainment of a gas having a substantially-reduced hydrocarbon (methane) content with respect to the feed gaseous flow, and a step in which the gas thus obtained is subjected to the completion of the reforming of the hydrocarbons still present therein by means of passage through an appropriate catalyser, until the equilibrium of the reforming and shift reactions is reached or nearly reached.

The aforesaid gas, obtained by the same partial combustion with oxygen of the feed gaseous flow comprising hydrogen, carbon monoxide, carbon dioxide, steam and hydrocarbons, is called "partially transformed gas", and this definition will be used below in the description and in the subsequent claims.

Although advantageous from different standpoints, the aforesaid prior art process has recognised drawbacks among which the main one consists in that the feed gaseous flow comprising hydrocarbons, especially if it contains a high hydrocarbon concentration, when subjected to partial combustion with oxygen in the autothermal reformer exhibits the real risk of generating significant quantities of soot, due to the high temperatures which are reached in the zones lacking oxygen, inevitably present in the mixing processes.

It is well-known that, associated with the soot production, is a high possibility of rapidly poisoning the catalyser used for the autothermal reforming, as well as the dirtying of the apparatuses downstream of the reformer, in particular of the boilers, with consequent high maintenance costs. The soot moreover negatively impacts both the overall yield of the process, due to the smaller quantity of hydrogen and carbon monoxide produced with the same combusted hydrocarbon, and the overall conduction of the same autothermal reformer.

### Summary of the invention

This technical problem underlying the present invention is that of devising and making available a process for producing synthesis gas of the type considered which is capable of permitting high production capacities with high yields and capable of eliminating the production of soot in the autothermal reformer even in the presence of high hydrocarbon concentrations, so as to overcome, in a simple and effective manner, the limitations and/or drawbacks mentioned with reference to the prior art.

This problem is solved according to the present invention by a process for producing synthesis gas by means of the treatment of catalytic autothermal reforming of a feed gaseous flow comprising hydrocarbons, with the obtainment of partially transformed gas and synthesis gas, characterised in that it comprises the operative steps of:
- mixing a first portion of said feed gaseous flow comprising hydrocarbons with a gaseous flow comprising oxygen,
- subjecting the resulting mixture to partial combustion with the obtainment of a gaseous flow of at least partially combusted gases;
- mixing a second portion of said gaseous flow comprising hydrocarbons with said gaseous flow of at least partially combusted gases so to attain a dilution of the concentration of the hydrocarbons present therein; and
- subjecting the resulting mixture to said catalytic autothermal reforming.

According to an aspect of the process according to the invention, the mixing of said first portion of said feed gaseous flow comprising hydrocarbons with said gaseous flow comprising oxygen is carried out in a burner inside an autothermal reformer.

According to another aspect of the process according to the invention, the mixing of said first portion of said feed gaseous flow comprising hydrocarbons with said gaseous flow comprising oxygen is carried out in a burner located outside said autothermal reformer and in fluid communication therewith.

The present invention is based on the fact that premixing a part of the gaseous flow comprising hydrocarbons with the gaseous flow comprising oxygen in an appropriate burner inside or outside the autothermal reformer, so as to attain the partial combustion of said hydrocarbons, it is possible to obtain a lower flame temperature than that of a diffusion flame otherwise obtained by separately feeding the aforesaid gaseous flows into an autothermal reformer in the same ratio, and a consequent lower heat of reaction possessed by the at least partially combusted gases deriving from the aforesaid combustion.

The subsequent mixing of the at least partially combusted gases with the remaining portion of the gaseous flow comprising hydrocarbons in the autothermal reformer advantageously leads to a dilution of the hydrocarbon concentration in the gaseous mixture subjected to reforming and in a particularly advantageous manner it is avoided the formation of temperature peaks and a non-uniform composition distribution, which are typical of a diffusion flame obtained in a conventional manner by mixing the gaseous flow comprising hydrocarbons and the gaseous flow comprising oxygen in the autothermal reformer. In such a manner it is therefore possible to avoid the formation of soot.

Moreover, in the process according to the invention, the mixing temperature of the gaseous flow portion comprising hydrocarbons fed directly to the autothermal reformer and the gaseous flow of the at least partially combusted gases coming from said burner can be appropriately regulated by varying the feed ratio to the burner of the related gaseous flow portion comprising hydrocarbons and the gaseous flow comprising oxygen.

Therefore, the process according to the invention advantageously and in a simple manner permits an accurate and constant control of the partial combustion with oxygen in the autothermal reformer so to avoid the formation of soot.

According to a further aspect of the process according to the invention, the quantity of at least partially combusted gases mixed with said second portion of said feed gaseous flow comprising hydrocarbons is such that in the gaseous mixture to be subjected to reforming, the hydrocarbon concentration is approximately in the range of 10-50%.

In fact, zero soot formation has been ascertained at these hydrocarbon concentration values in the gaseous mixture to be subjected to forced oxidation in the autothermal reformer.

The present invention also regards an apparatus for producing synthesis gas by means of catalytic autothermal reforming of a feed gaseous flow comprising hydrocarbons, comprising an autothermal reformer having a substantially cylindrical shell with vertical axis closed by respective upper and lower ends and equipped with an inlet opening for the gases to be reformed and an outlet opening of said synthesis gas, a first zone and a second zone being defined in said autothermal reformer which are in direct fluid communication with each other and overlapped with each other and aligned along the vertical axis, a catalytic bed being supported in the second zone, characterised in that a third substantially tubular zone is defined in said autothermal reformer, the third zone being extended over said inlet opening and being opened into said first zone, and in that said apparatus furthermore comprises:
- at least one burner in fluid communication with said third zone of the autothermal reformer,
- means for feeding into said at least one burner a gaseous mixture obtained by mixing a gaseous flow comprising oxygen and a portion of the gases to be reformed, and
- means for feeding a gas portion to be reformed into said third zone of the autothermal reformer.

Further characteristics and advantages of the process and apparatus for producing synthesis gas according to the invention will be clearer from the following description of a preferred embodiment thereof, given as indicative and non-limiting with reference to the attached drawings.

### Brief description of the drawings

- Figure 1 represents a block diagram of a process for producing synthesis gas according to the present invention;
- Figure 2 schematically represents, in axial section, an autothermal reformer apparatus used for the actuation of the process of the present invention;
- Figure 3 schematically represents, in axial section, another autothermal reformer apparatus used for the actuation of the process of the present invention;
- Figure 4 schematically represents a cross-section of the autothermal reformer apparatus of figure 3, taken along the B-B trace plane of figure 3.

### Detailed description of a preferred embodiment

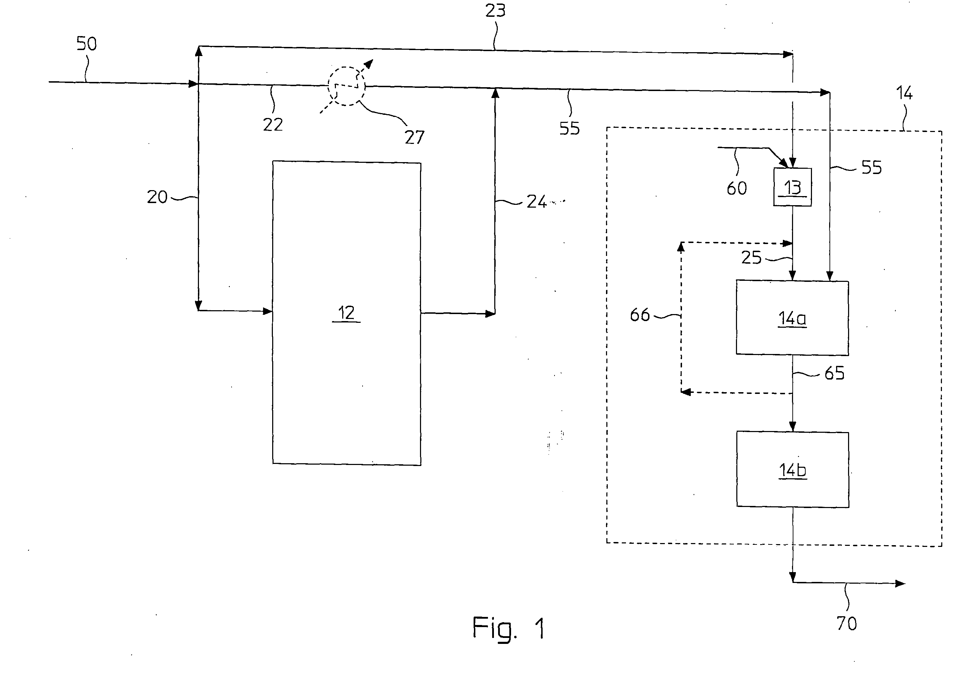

With reference to figure 1, the process for producing synthesis gas 70 according to the present invention is based on the treatment of catalytic autothermal reforming of a feed gaseous flow 55 comprising hydrocarbons, for example a natural gas such as methane and the like.

Preferably, in the non-limiting example illustrated in the block diagram of figure 1, the catalytic autothermal reforming treatment is preceded by a so-called primary and/or pre-reforming steam reforming treatment. More precisely, in the case of primary steam reforming treatment, a part 20 of a gaseous flow 50 comprising hydrocarbons is directed, through a related duct, to a primary steam reformer 12, to be subjected to said steam reforming in a per se conventional manner. Another part 22 of said gaseous flow 50 comprising hydrocarbons (non-treated part) is sent downstream of said primary reformer 12, through a related by-pass duct.

From the primary steam reforming, a gaseous flow 24 is obtained comprising carbon monoxide, hydrogen, carbon dioxide, steam and unreacted hydrocarbons (for example CH4); downstream of said primary reformer 12, after having passed through a related duct, the gaseous flow 24 is recombined with said untreated part 22 of the gaseous flow 50 comprising hydrocarbons, to form the feed gaseous flow 55 comprising hydrocarbons.

The feed gaseous flow 55 is fed to a catalytic autothermal reformer 14, so to be subjected to a catalytic autothermal reforming treatment, in the manner which will be described below in the present description.

In accordance with the present invention, a further untreated part 23 of the gaseous flow 50 comprising hydrocarbons is mixed with a gaseous flow 60 comprising oxygen and the resulting mixture is fed into a burner 13.

In the present non-limiting example illustrated in figure 1, the burner 13 is situated inside the autothermal reformer 14 upstream of a respective first zone 14a for carrying out the reforming step of said feed gaseous flow 55 comprising hydrocarbons, in the manner which will be better described below.

In the burner 13, the portion 23 of the gaseous flow 50 comprising hydrocarbons is subjected to partial combustion with oxygen 60, obtaining therewith an at least partially combusted gas flow 25 which is mixed with the gaseous flow 55 comprising hydrocarbons in the autothermal reformer 14.

Advantageously, the quantity of at least partially combusted gases 25 mixed with said feed gaseous flow 55 comprising hydrocarbons is preferably such that in the gaseous mixture to be subjected to the reforming step, the hydrocarbon concentration is less than a predetermined value, for example it is comprised in the range of 10% on dry basis to 50% on dry basis. Preferably, the concentration of hydrocarbons is approximately in the range of 10-30% on dry basis.

In the autothermal reformer 14, the gaseous mixture obtained by the mixing of said at least partially combusted gas flow 25 and said feed gaseous flow 55 comprising hydrocarbons is subjected to a catalytic autothermal reforming treatment, which essentially comprises:
- a reforming step in gaseous phase, which is completed in said first zone 14a of said autothermal reformer 14, substantially extended from the inlet therein of the feed gaseous flow 55 comprising hydrocarbons up to the upper surface (free surface) of a catalytic bed 16, and
- a step of catalytic reforming through said appropriate catalytic bed 16, with which said reformer 14 is equipped in a second zone thereof 14b, in direct fluid communication with said zone 14a.

From the reforming step in gaseous phase, it is obtained a gas having a reduced hydrocarbons (for example methane) residual content, herein below called partially transformed gas 65, from which, after the completion of the reforming through said catalytic bed 16, the desired synthesis gas 70 is obtained which is at chemical equilibrium.

In accordance with a variant of the process according to the invention, the gaseous flow 55 comprising hydrocarbons fed to the autothermal reformer 14 is mixed not only with said at least partially combusted gas flow 25 coming from the burner 13 but also with a part 66 of said partially transformed gas 65, so as to advantageously attain a further dilution, with hydrogen, carbon monoxide and carbon dioxide, of the concentration of the hydrocarbons therein present.

The resulting mixture is subjected to said catalytic autothermal reforming without any soot formation.

According to a further aspect of the present invention, the aforesaid untreated part 22 of the gaseous flow 50 comprising hydrocarbons intended to form an integral part of the gaseous flow 55 comprising hydrocarbons is preheated by means of a heat exchanger 27 to a temperature greater than that possessed by the portion 23 of said gaseous flow 50 comprising hydrocarbons fed to said burner 13.

In such a manner, it is possible to advantageously reduce the consumption of oxygen (whose cost is relatively high) as the gaseous flow 55 comprising hydrocarbons fed to the autothermal reformer has a higher thermal content and therefore a lower heat of reaction is sufficient (thus lower oxygen consumption) for the partially combusted gases 25 obtained in the burner 13 for obtaining an adequate reforming of the hydrocarbons in the autothermal reformer 14, without soot formation.

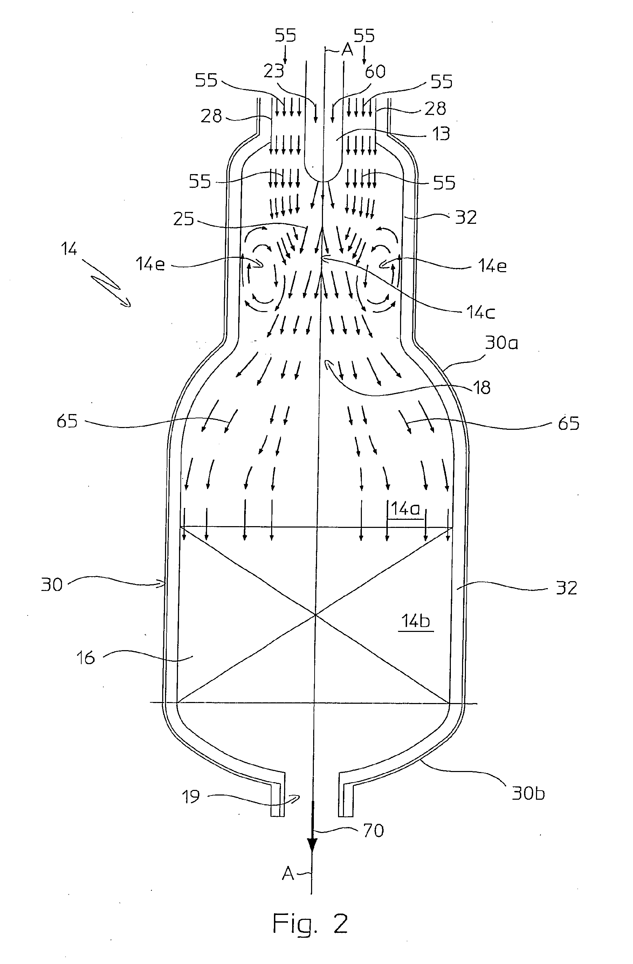

A preferred embodiment of an apparatus for achieving a process according to the present invention is shown in figure 2. Such apparatus comprises a reformer 14 having a substantially cylindrical shell 30, with vertical A-A axis, closed by respective upper 30a and lower 30b ends, and having the inner wall coated with refractory material 32 which is resistant to high temperatures.

The upper end 30a is equipped with an inlet opening 18 of gas to be reformed and the lower end 30a is equipped with a discharge opening 19 of said synthesis gas 70.

The first zone 14a is overlapped on the second zone 14b (where the catalytic bed 16 is supported in a per se known manner) and the zones 14a and 14b are aligned along the vertical axis A-A.

In accordance with the present invention, the autothermal reformer 14 has a third zone 14c extended over said inlet opening 18 and opened into said first zone 14a. More in particular, said third zone 14c is substantially cylindrical, with reduced diameter with respect to that of the shell 30, it has a longitudinal axis extended in the aforesaid direction A-A and is overlapped on the first zone 14a.

On the top of the zone 14c, a burner 13 is foreseen supported, fed with said portion 23 of the gaseous flow 50 comprising hydrocarbons and said gaseous flow 60 comprising oxygen as well as a duct 28 coaxial with the burner 13 for feeding said gaseous flow 55 comprising hydrocarbons into said third zone 14c of the autothermal reformer 14.

With regard to the operation of the reformer 14, the gaseous mixture obtained in the burner 13 is subjected to partial combustion with oxygen, resulting in a flame and an at least partially combusted gas jet 25 directed into the third zone 14c of the reformer 14.

Such at least partially combusted gas jet 25 permits the suction of the feed gaseous flow 55, obtaining a gaseous mixture therewith which is subjected to reforming in said third zone 14c of the autothermal reformer 14.

Advantageously, the pressure of the currents 23 and 60 is such to impart a speed to the gas jet 25 such as to cause, in the third zone 14c, a recirculation of the gaseous current present in the third zone 14c of the reformer 14, in particular in a peripheral part 14e of said third zone 14c, thus obtaining a greater uniformity of composition and temperature of the gaseous mixture subjected to reforming in the third zone 14c and preventing the formation of soot.

At the end of the third zone 14c, the aforesaid gaseous current is inserted in the aforesaid first zone 14a, and due to the fact that the third zone 14c has smaller dimensions than the first zone 14a, the gaseous current expands, coming to substantially occupy the entire first zone 14a. In such first zone 14a, the reforming in gaseous phase of the feed gaseous flow 55 comprising hydrocarbons is substantially completed, thus obtaining a gaseous flow 65 of partially transformed gas.

Said gaseous flow of partially transformed gas advances towards the zone 14b containing the catalytic bed 16, where it is converted into a synthesis gas 70 which is recovered by the outlet opening 19 of the reformer 14.

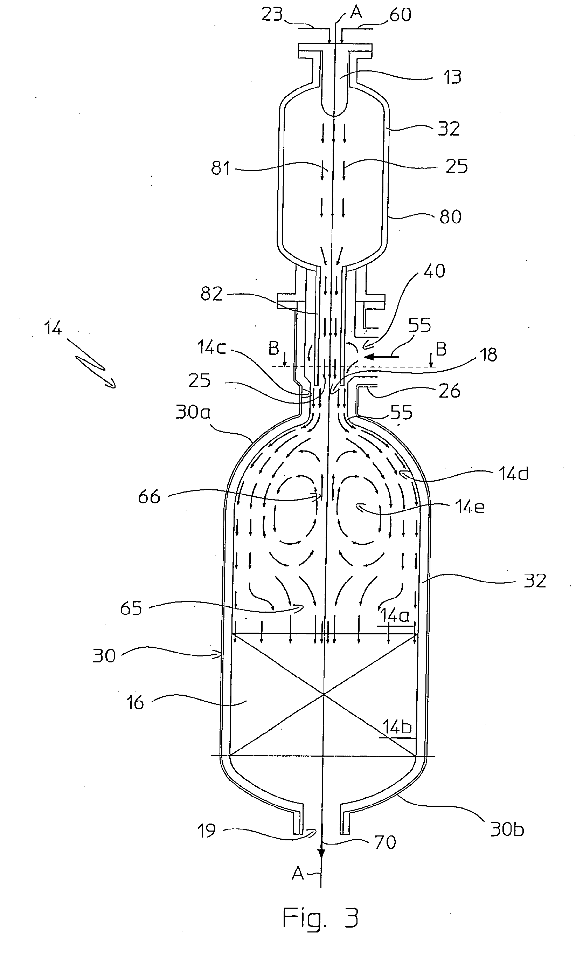

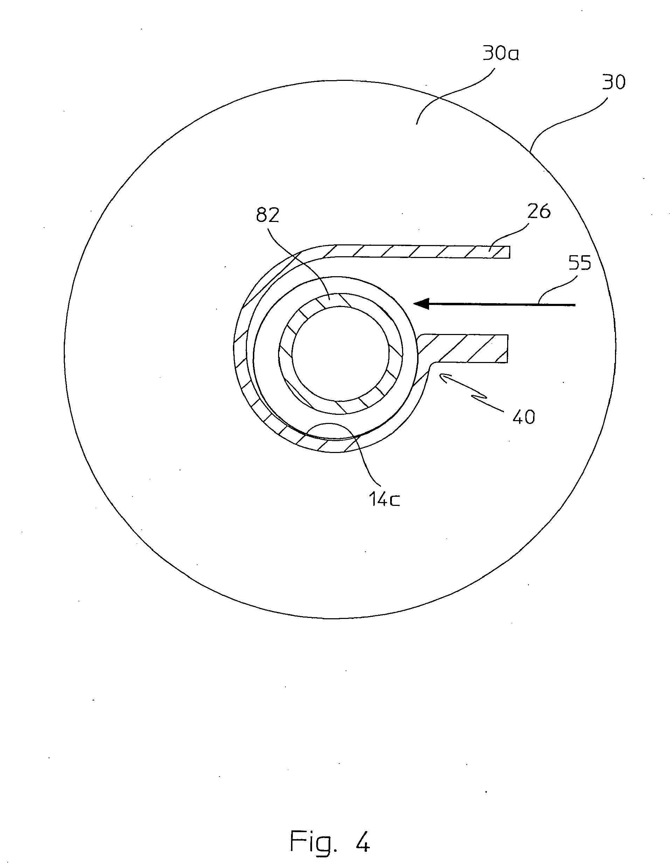

In figures 3 and 4, another preferred apparatus for achieving the process of the invention is now described.

The same reference numbers are assigned to the apparatus elements shown in figures 3 and 4 which are structurally or functionally equivalent to corresponding elements of the apparatus shown in figure 2.

For the sake of simplicity, said elements will not be described further.

The apparatus of the figures 3 and 4 is distinguished from the apparatus of figure 2 described above in that it has a combustion chamber 81, delimited by walls 80 which are internally coated with refractory material 32, the chamber 81 being supported on the top of the third zone 14c of the reformer 14 and in communication therewith.

Moreover, at the top of said combustion chamber 81, a burner 13 is supported, fed with said portion 23 of the gaseous flow 50 comprising hydrocarbons and said gaseous flow 60 comprising oxygen, while said flow 55 comprising hydrocarbons is introduced into the third zone 14c by means of a duct 28 which is laterally introduced in the aforesaid third zone 14c.

With regard to the operation of this apparatus, the gaseous mixture obtained in the burner 13 by the mixture of said portion 23 of the gaseous flow comprising hydrocarbons and said gaseous flow comprising oxygen 60 is subjected to partial combustion with oxygen, without forming soot, in the combustion chamber 81, with the obtainment of a gaseous flow 25 of at least partially combusted gases.

Said gaseous flow 25 of at least partially combusted gases advances in the combustion chamber 81 along a duct 82 until it is introduced into the third zone 14c of the reformer 14, where it is mixed with the feed gaseous flow 55 comprising hydrocarbons.

The resulting mixture is subjected to reforming in the gaseous phase already in the third zone 14c, said conversion being completed in the first zone 14a with the obtainment of a partially transformed gas 65 which in turn is converted into a synthesis gas 70 in the second zone 14b comprising the catalytic bed 16.

Advantageously, and in accordance with one aspect of the present invention, said gaseous flow 55 comprising hydrocarbons is also mixed with a part 66 of said partially transformed gas 65 so to attain a further dilution, with hydrogen, carbon monoxide and carbon dioxide, of the hydrocarbon concentration present therein. In particular and advantageously, such a mixture is carried out in a peripheral part 14d of the first zone 14a, which is located at the inlet of said reformer 14.

For the aforesaid purpose, to the feed gaseous flow 55 comprising hydrocarbons which is fed into said reformer 14 along a predetermined direction A-A, a swirling rotary motion is imparted around said direction.

In particular and according to a further characteristic of the present invention, the aforesaid swirling rotary motion (figure 3) is made in said substantially cylindrical zone 14c, provided in said autothermal reformer 14 and extended for a section of predetermined length beginning from the inlet of the duct 26 bearing the feed gaseous flow 55 comprising hydrocarbons, said cylindrical zone 14c being opened into the zone 14a, which has a cross-section of greater size than that of the tubular zone 14c.

In the tubular zone 14c, which has a longitudinal axis extended in the aforesaid direction A-A, swirling means 40 are provided which are adapted to impart the swirling rotary motion to the gaseous flow entering into the reformer 14. In the example shown in figures 3 and 4, the aforesaid swirling means 40 comprise a so-called spiral-like inlet, formed by the tubular zone 14c and by the duct 26 bearing the feed gaseous flow 55, where the duct 26 is introduced into the tubular zone 14c along an axis which is substantially perpendicular to the longitudinal axis A-A of the tubular zone 14c and misaligned with respect to the longitudinal axis A-A itself, i.e. the duct 26 is tangentially engaged in the tubular zone 14c.

Alternatively, the swirling means can be other per se conventional structures, for this reason not illustrated in the figures: for example, they can comprise a radial blading made inside the tubular zone 14c, through which the rotary swirling motion is imparted to the feed gaseous flow 55 introduced into the tubular zone 14c substantially along the longitudinal axis A-A itself.

In such a manner, the mixing of the gaseous flow 25 of at least partially combusted gases coming from the combustion chamber 80 with the gaseous flow 55 comprising hydrocarbons is considerably favoured in the zone 14c, so preventing the formation of soot.

Moreover, the resulting mixture comprising the feed gaseous flow 55 comprising hydrocarbons, due to the aforesaid rotary swirling motion, is caused to enter into the peripheral part 14d of the zone 14a substantially in the direction of the axis A-A, the mixture having, due to the swirling means 40, a rotation component around the axis A-A.

Due to the fact that the zone 14a has greater dimensions than the zone 14c, and due to the rotation imposed on the feed gaseous flow 55 comprising hydrocarbons, the gaseous mixture entering in the peripheral part 14d of the zone 14a "is opened", moving away from the axis A-A towards the walls of the zone 14a (shell 30 of the reformer 14), and continuing to rotate it creates a "recirculation", according to a per se known phenomenon.

Such a gas recirculation schematically has a toroidal progression around the axis A-A of the autothermal reformer 14 and in particular leads to, in normal operating conditions, the dilution of said gaseous mixture and in particular of the gaseous flow 55 comprising hydrocarbons with a portion 66 of the partially transformed gas 65.

For this reason, the hydrocarbon concentration is therefore appropriately diluted in such a gaseous mixture, such that the reforming in gaseous phase in the zone 14a is completed without giving rise to any soot production.

Of course, a man skilled in the art, for the purpose of satisfying specific and contingent needs, can make numerous modifications and variants to the process for producing synthesis gas and apparatus described above, all moreover contain in the protective scope of the present invention as defined by the following claims.

For example, the gaseous flow part comprising untreated hydrocarbons in said primary steam reformer (portions 22 and 23) can be entirely sent to the burner 13, thereby obtaining the feed flow 55 to the reformer 14 with a particularly reduced hydrocarbon concentration (10-12% on dry basis) coinciding with that obtained from the conversion in the steam reformer.

Moreover, if desired, the portion 23 of the gaseous flow comprising hydrocarbons sent to the burner 13 can be added with steam in order to reduce the risk of soot formation and favour the reforming reactions.

## Claims

1. Process for producing synthesis gas (70) by means of catalytic autothermal reforming treatment of a feed gaseous flow (50) comprising hydrocarbons, with the obtainment of partially transformed gas (65) and synthesis gas (70), **characterised in that** it comprises the operative steps of:
- mixing a first portion (23) of said feed gaseous flow (50) comprising hydrocarbons with a gaseous flow (60) comprising oxygen,
- subjecting the resulting mixture to partial combustion, with the obtainment of a gaseous flow (25) of at least partially combusted gases,
- mixing a second portion (55) of said gaseous flow comprising hydrocarbons with said gaseous flow (25) of at least partially combusted gases, so as to attain a dilution of the concentration of the hydrocarbons present therein, and
- subjecting the resulting mixture to said catalytic autothermal reforming.

2. Process for producing synthesis gas (70) by means of catalytic autothermal reforming of a feed gaseous flow (50) comprising hydrocarbons in a respective autothermal reformer (14), with the obtainment of partially transformed gas (65) and synthesis gas (70), said catalytic autothermal reforming treatment comprising a step of partial combustion with oxygen (60) and a step of catalytic reforming, **characterised in that** it comprises the steps of:
- mixing a first portion (23) of said feed gaseous flow (50) comprising hydrocarbons with a gaseous flow (60) comprising oxygen,
- subjecting the resulting mixture to at least partial combustion, with the obtainment of a gaseous flow (25) of at least partially combusted gases,
- mixing a second portion (55) of said gaseous flow comprising hydrocarbons with said gaseous flow (25) of at least partially combusted gases so as to attain a dilution of the concentration of the hydrocarbons present therein and
- subjecting the resulting mixture to reforming in gaseous phase before said catalytic reforming in said autothermal reformer (14).

3. Process according to claim 2, **characterised in that** the mixing of said first portion (23) of said feed gaseous flow (50) comprising hydrocarbons with said gaseous flow (60) comprising oxygen is carried out in a burner (13) inside said autothermal reformer (14).

4. Process according to claim 2, **characterised in that** the mixing of said first portion (23) of said feed gaseous flow (50) comprising hydrocarbons with said gaseous flow (60) comprising oxygen is carried out in a burner (13) situated outside said autothermal reformer (14) and in fluid communication therewith.

5. Process according to any one of the preceding claims 2-4, **characterised in that** said second portion (55) of said gaseous flow (50) comprising hydrocarbons is mixed with said gaseous flow (25) of at least partially combusted gases inside said autothermal reformer (14).

6. Process according to claim 5, **characterised in that** the quantity of at least partially combusted gases (25) mixed with said second portion (55) of said feed gaseous flow (50) comprising hydrocarbons is such that in the gaseous mixture to be subjected to the reforming step in gaseous phase, the hydrocarbon concentration is less than a predetermined value.

7. Process according to claim 6, **characterised in that** said predetermined value is in the range of 10-50%.

8. Process according to any one of the preceding claims 2-7, **characterised in that** said second portion (55) of said feed gaseous flow (50) is also mixed with a part of said partially transformed gas (65) and the resulting gaseous mixture is subjected to said catalytic autothermal reforming.

9. Process according to claim 8, **characterised in that** the mixing of said second portion (55) of said feed gaseous flow (50) comprising hydrocarbons and said partially transformed gas (65) occurs by imparting, to said second portion (55) of said feed gaseous flow (50) comprising hydrocarbons fed into said autothermal reformer (14), a rotary swirling motion around the predetermined feed direction (A-A).

10. Process according to any one of the preceding claims, **characterised in that** said catalytic autothermal reforming treatment is preceded by the following operative steps:
- subjecting a portion (20) of said gaseous flow (50) comprising hydrocarbons to steam reforming, with the obtainment of a gaseous flow (24) comprising carbon monoxide, hydrogen, carbon dioxide, steam and unreacted hydrocarbons,
- recombining said gaseous flow (24) comprising carbon monoxide, hydrogen, carbon dioxide, steam and unreacted hydrocarbons with an untreated portion (22) of said gaseous flow (50) comprising hydrocarbons to form said second portion of said feed gaseous flow (55) comprising hydrocarbons which is subjected to said catalytic autothermal reforming treatment.

11. Process according to claim 10, **characterised in that** said untreated portion (22) of said gaseous flow (50) is preheated by means of a heat exchanger (27) to a greater temperature than that possessed by said first portion (23) of said gaseous flow (50) comprising hydrocarbons.

12. Apparatus for producing synthesis gas (70), by means of catalytic autothermal reforming of a feed gaseous flow (50) comprising hydrocarbons, comprising an autothermal reformer (14) having a substantially cylindrical shell (30) with vertical axis (A-A) closed by respective upper and lower ends (30a, 30b) and equipped with an inlet opening (18) for the gases to be reformed and a discharge opening (19) of said synthesis gas (70), a first zone (14a) and a second zone (14b) being defined in said autothermal reformer (14), in direct fluid communication with each other and overlapped with each other and aligned along a vertical axis (A-A), a catalytic bed (16) being supported in the second zone (14b), **characterised in that** in said autothermal reformer (14) a third substantially tubular zone (14c) is defined, said third zone (14c) being extended over said inlet opening (18) and being opened into said first zone (14a), and **in that** said apparatus further comprises:
- at least one burner (13) in fluid communication with said third zone (14c) of the autothermal reformer (14),
- means for feeding into said at least one burner (13) a gaseous mixture obtained by mixing a gaseous flow (60) comprising oxygen and a portion (23) of the gases to be reformed, and
- means for feeding a portion (55) of gas to be reformed into said third zone (14c) of the autothermal reformer (14).

13. Apparatus according to claim 12, **characterised in that** said burner (13) is supported at the top of said third zone (14c) of said autothermal reformer (14) and is aligned along the vertical axis (A-A).

14. Apparatus according to claim 13, **characterised in that** said means for feeding said portion (55) of gas to be reformed into said third zone (14c) of the autothermal reformer (14) comprises an external duct coaxial with said burner (13).

15. Apparatus according to claim 12, **characterised in that** said burner is supported on the top of a combustion chamber in fluid communication with said third zone (14c) of the autothermal reformer (14).

16. Apparatus according to any one of the claims 12-15, **characterised in that** it comprises swirling means (40) supported in said third zone (14c) adapted to impart a rotary swirling motion to the gas to be reformed entering into the autothermal reformer (14).
